# EUROPEAN PATENT SPECIFICATION

(11) **EP 1 947 714 B1**
(45) Date of publication and mention of the grant of the patent: **12.06.2013**
(21) Application number: 06823080.4
(22) Date of filing: 07.11.2006
(51) Int. Cl.: H01M 4/02, H01M 4/04, H01M 10/052, H01M 4/13, H01M 4/139, H01M 4/62, H01M 4/36

(54) **NEGATIVE ELECTRODE FOR NONAQUEOUS ELECTROLYTE SECONDARY BATTERY**
NEGATIVE ELEKTRODE FÜR EINE SEKUNDÄRBATTERIE MIT WASSERFREIEM ELEKTROLYT
ELECTRODE NEGATIVE POUR UNE BATTERIE SECONDAIRE ELECTROLYTIQUE NON AQUEUSE

(30) Priority: 08.11.2005 JP 2005323892
(43) Date of publication of application: 23.07.2008
(73) Proprietor: Mitsui Mining and Smelting Co., Ltd., Shinagawa-ku, Tokyo 141-8584 (JP)
(72) Inventor: IDE, Hitohiko, Ageo-shi, Saitama 362-0021 (JP); YASUDA, Kiyotaka, Ageo-shi, Saitama 362-0021 (JP); HYAKUTAKE, Masahiro, Ageo-shi, Saitama 362-0021 (JP); MATSUSHIMA, Hideaki, Ageo-shi, Saitama 362-0021 (JP)
(74) Representative: Forstmeyer, Dietmar
(86) International application number: PCT/JP2006/322167
(87) International publication number: WO 2007/055198

(56) References cited:
- EP-A- 1 271 674
- WO-A-2004/105152
- WO-A-2005/055345
- WO-A-2005/067078
- JP-A- 04 294 059
- JP-A- 2003 242 972
- JP-A- 2004 228 059
- JP-A- 2005 063 929
- JP-A- 2005 197 080
- US-A1- 2003 148 185
- US-A1- 2005 123 829

## Description

### Technical Field

This invention relates to a negative electrode for nonaqueous electrolyte secondary batteries such as lithium secondary batteries and a process of producing the same.

### Background Art

The present inventors have proposed a nonaqueous secondary battery negative electrode comprising a pair of surface layers for current collection, each surface of which is in contact with an electrolyte and an active material layer containing a particulate active material having high capability of forming a lithium compound interposed between the surface layers (see US 2005/208379A1, US 2006/051675A1, and US 2006/115735A1). The surface layers of the negative electrode disclosed each have a thickness of 0.3 to 10 µm. The surface layer provided on the surface of the active material layer protects the active material particles from being exposed on the electrode surface. Therefore, even if the particles are pulverized as a result of expansion and contraction accompanying charge/discharge cycles, they are prevented from falling off. This type of a negative electrode provides a battery with prolonged cycle life.

The surface layer aforementioned has a large number of micropores extending in its thickness direction, through which a nonaqueous electrolyte is allowed to pass. A nonaqueous electrolyte is able to infiltrate the micropores of small size and reach the active material layer because it has a smaller surface tension than an aqueous one. If the surface layer has too large a thickness, however, it would be difficult for a nonaqueous electrolyte to reach the active material layer, so that the overpotential in initial charge tends to increase. It follows that lithium ions may be reduced on the surface of the surface layer to form a lithium dendrite during charge of the secondary battery, that the nonaqueous electrolyte can decompose to increase the irreversible capacity, and that the positive electrode can be damaged.

WO 2005/055345 A discloses another electrode used as an anode or cathode for a secondary battery, a production method thereof and a secondary battery containing the same.

### Disclosure of the Invention

An object of the present invention is to provide a nonaqueous secondary battery negative electrode with further improved performance properties over the aforementioned conventional negative electrodes.

The present invention provides a nonaqueous secondary battery negative electrode having an active material layer containing a particulate active material. The active material layer has a first metallic material which has low capability of forming a lithium compound and is deposited between the active material particles by electroplating. The active material layer has its surface coated continuously with a surface layer. The surface layer has an average thickness of 0.25 µm or smaller and 0.01 µm or more and comprises a second metallic material which may be the same as or different from the first metallic material. The surface layer has a large number of micropores extending in the thickness direction thereof.

The invention also provides a preferred process of producing the negative electrode. The process comprises the steps of forming a coating layer using a slurry containing a particulate active material, subjecting the coating layer to electroplating in a plating bath containing a metallic material having low capability of forming a lithium compound to deposit the metallic material in a direction from one side to the other side of the coating layer, stopping the electroplating before the metallic material is deposited across the whole thickness of the coating layer, and removing the part of the coating layer where the metallic material is not deposited.

The invention also provides a nonaqueous secondary battery negative electrode having an active material layer containing particles of an active material. The active material layer has a metallic material which has low capability of forming a lithium compound and is deposited between the particles by electroplating using a plating bath having a pH of 7.1 or higher. The surface of the particles inside the active material layer are coated with the metallic material. Voids are formed between the metallic material-coated particles. The proportion of the voids in the active material layer is from 15% to 40% by volume.

### Brief Description of the Drawings

Fig. 1 schematically illustrates a cross-sectional structure of an embodiment of the nonaqueous secondary battery negative electrode according to the invention.
Fig. 2 presents illustrations showing a flow of a process of producing the negative electrode of Fig. 1.
Fig. 3 is an electron micrograph of the surface of the negative electrode obtained in Example 1.
Fig. 4 is an electron micrograph of the surface of the negative electrode obtained in Example 2.
Fig. 5 shows first charging curves of lithium secondary batteries using the negative electrodes obtained in Examples and Comparative Example.

### Best Mode for Carrying out the Invention

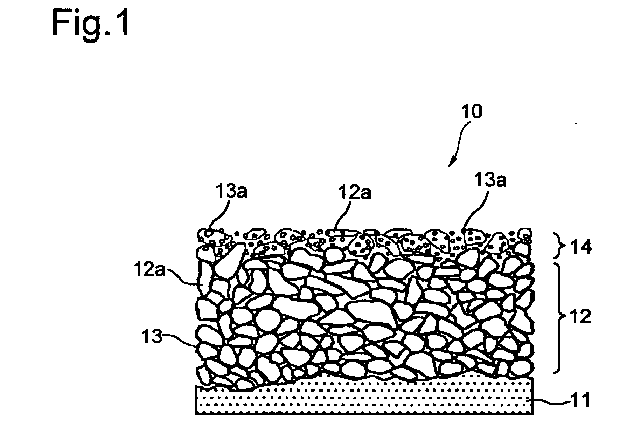

The present invention will be described based on its preferred embodiments by way of the accompanying drawing. Fig. 1 schematically illustrates a cross-sectional structure of an embodiment of the nonaqueous secondary battery negative electrode according to the invention. The negative electrode 10 has a current collector 11 and an active material layer 12 formed on at least one side of the current collector 11. While Fig. 1 shows only one side of the current collector 11, the active material layer 12 may also be formed on both side of the current collector 12.

The active material layer 12 contains particles 12a of an active material. The active material layer 12 is formed by, for example, applying a slurry containing the active material particles 12a. The active material is exemplified by silicon based materials, tin based materials, aluminum based materials, and germanium based materials. Silicon based materials are particularly preferred to provide an improved capacity density per weight of a negative electrode. Examples of the silicon based material include those capable of intercalating lithium, such as elemental silicon, compounds of silicon and metal element(s), and silicon oxides.

As shown in Fig.1, the active material layer 12 has a metallic material 13 which has low capability of forming a lithium compound and is penetrating between the particles 12a in the layer as a result of deposition by electroplating. The metallic material 13 is depicted for convenience as a thick line surrounding the individual particles 12a in Fig. 1. It is preferred that the metallic material 13 is present throughout the thickness of the active material layer 12 in a manner that the particles 12a exist in the deposited metallic material 13. By such a configuration, the particles 12a hardly fall off even when they pulverize due to expansion and contraction accompanying charge/discharge cycles. Furthermore, electron conductivity throughout the active material layer 12 is secured by the metallic material 13 so that occurrence of an electrically isolated particle 12a, especially in the depth of the active material layer 12, is prevented effectively. This is particularly advantageous for negative electrodes using a semiconductive, poorly electron-conductive active material, such as a silicon based material. Whether the metallic material 13 penetrates the whole thickness of the active material layer 12 can be observed by mapping the metallic material 13 using an electron microscope.

The surface of the active material particles 12a inside the active material layer 12 is coated with the deposited metallic material 13. It should be noted that the metallic material 13 does not cover the surface of the particles 12a in a manner that interferes with a nonaqueous electrolyte reaching the particles 12a. In other words, the metallic material 13 coats the surface of the particles 12a while securing gaps through which a nonaqueous electrolyte may reach the particles 12a.

The average thickness of the metallic material 13 covering the surface of the active material particles 12 is preferably as thin as 0.05 to 2 µm, more preferably 0.1 to 0.25 µm. With this minimum thickness, the active material particles 12a can be coated substantially continuously with the metallic material 13, thereby to prevent falling-off of the particles 12a having pulverized as a result of expansion and contraction accompanying charge/discharge cycles while improving the energy density. As used herein the term "average thickness" denotes an average calculated from the thicknesses in the part of the surface of the particle 12a that is actually coated with the metallic material 13. The non-coated part of the surface of the particle 12a is excluded from the basis of calculation. There are cases where the thickness of the metallic material 13 covering the surface of the active material particles 12a exceeds the thickness of the surface layer 14 hereinafter described. This phenomenon is attributed to the following cause. When the negative electrode 10 is produced by the process described later, the degree of electroplating differs between the particles 12a located deep in the active material layer 12 (i.e., near the current collector 11) and those located on the surface of the negative electrode 10. As a result, the particles 12a that are located deeper in the active material layer 12 are liable to be coated thicker with the metallic material 13.

Voids are formed between the particles 12a coated with the metallic material 13. The voids provide vacant spaces to serve to relax the stress resulting from volumetric changes of the active material particles 12a accompanying charge and discharge cycles. The volume gain of the active material particles 12a resulting from charging is absorbed by the voids. Therefore, the particles 12a are less liable to pulverize, and noticeable deformation of the negative electrode 10 is avoided effectively. The voids formed between the particles 12 also provide channels for a nonaqueous electrolyte. For all these considerations, the proportion of the voids in the active material layer 12 is preferably 15% to 40% by volume, still preferably 20% to 35% by volume. When the proportion of the voids is less than that proportion, it may be necessary to positively make holes by laser machining, punching or etching to secure necessary vacancy for the negative electrode, which can invite increase of production cost or impair production stability. The proportion of the voids is obtained through mapping by an electron microscope. The proportion of the voids can be controlled within the recited range by, for example, properly selecting the conditions for depositing the metallic material 13 between the particles 12a by electroplating. Such conditions include the composition and pH of the plating bath and the electrolytic current density.

The void volume is also controllable by proper selection of the particle size of the active material particles 12a. In this regard, the particles 12a preferably have a maximum particle size of 30 µm or smaller, still preferably 10 µm or smaller. The particle size of the particles 12a represented in terms of D₅₀ is preferably 0.1 to 8 µm, still preferably 0.3 to 4 µm. The particle size of the particles can be measured by the laser diffraction-scattering method for particle size distribution or electron microscopic (SEM) observation.

If the amount of the active material based on the whole negative electrode is too small, the battery energy density is difficult to be improved sufficiently. If it is too large, the binding strength tends to be insufficient so that the active material is liable to fall off. A suitable amount of the active material for these considerations is 5% to 80%, more suitably 10% to 70%, even more suitably 20% to 50%, by weight based on the whole negative electrode.

The metallic material 13 having low capability of forming a lithium compound and precipitating in the active material layer 12 is an electroconductive material exemplified by copper, nickel, iron, cobalt, and their alloys. A highly ductile metallic material is preferred, which forms on the surface of the particle 12a a coat break-proof against expansion and shrinking of the particle 12a in the active material. A preferred example of such a material is copper. The expression "low capability of forming a lithium compound" as used herein means no capability of forming an intermetallic compound or a solid solution with lithium or, if any, the capability is such that the resulting lithium compound contains only a trace amount of lithium or is very unstable.

Some conventional negative electrodes for nonaqueous secondary batteries contain particles of an electroconductive material such as acetylene black or graphite in the active material layer to enhance the electron conductivity of the active material layer. It is preferred, however, for the negative electrode of the present embodiment to contain no or a minimized amount, if any, of electroconductive material particles in the active material layer, e.g., not more than 3% by weight based on the active material layer 12. The reason therefor will be explained later with respect to the process of producing the negative electrode 10, for which reason the most preferred material as an active material is elemental silicon.

As previously stated, it is preferred in the negative electrode of the present embodiment that the metallic material 13 is present across the whole thickness of the active material layer 12. This preferred manner of existence of the metallic material 13 in the whole thickness direction of active material layer 12 being defined to have an existence ratio of 100%, the present invention does not demand the existence ratio of the metallic material 13 is 100%. To put it another way, the metallic material 13 is not required to exist over the whole thickness of the active material layer 12. The inventors have revealed that the effects as desired are obtained as far as the existence ratio of the metallic material 13 in the active material layer 12 is 90% or more. At an existence ratio of less than 90%, the metallic material 13 can fail to prevent the particles 12a from falling off the active material layer 12. The existence ratio of the metallic material 13 in the active material layer 12 is obtained by observing a cross-section of the negative electrode 10 under a microscope. When the existence ratio of the metallic material 13 is 90%, for example, it means that the metallic material 13 exists in 90% of the thickness of the active material layer 12.

The negative electrode 10 of the present embodiment has a thin surface layer 14 on the surface of the active material layer 12. The surface layer 14 coats the active material layer 12 continuously. The average thickness of the surface layer 14 is as small as 0.25 µm or less, preferably 0.1 µm or less, still preferably 0.08 µm or less. In using a poorly electron-conductive active material such as silicon as an active material, the surface layer has an average thickness of 0.01 µm or more, to secure electron conductivity. The term "average thickness" as used here is a value calculated from the thicknesses including those measured in the part where the active material layer 12 is not coated with the surface layer 14. When the existence ratio of the metallic material 13 in the active material layer 12 is less than 100%, the active material layer 12 is generally not coated with the surface layer.

The negative electrode 10's having such a thin surface layer 14 or not having a surface layer enables decrease of overpotential of a secondary battery having the negative electrode 10 in the battery's assembling and initial charging. This means that lithium reduction on the surface of the negative electrode 10 can be prevented during charge. Reduction of lithium would lead to generation of a lithium dendrite, which causes a short circuit between the opposing electrodes. Decrease of overpotential is also advantageous to prevent decomposition of a nonaqueous electrolyte. Decomposition of a nonaqueous electrolyte will result in increase of irreversible capacity. Decrease of overpotential is also beneficial to protect a positive electrode from being damaged. The negative electrode 10's having such a thin surface layer 14 or not having a surface layer provides the advantage of improving capacity density of a secondary battery having the negative electrode.

In cases where the negative electrode 10 has the surface layer 14, the surface layer 14 coats the surface of the active material layer 12 either continuously or discontinuously. As the surface layer 14 becomes thinner, the coat of the surface layer changes from continuous to discontinuous. As the thickness becomes further smaller, the surface layer 14 is fine particles 13a of the metallic material 13 adhered to the particles 12a on and near the surface of the active material layer 12 as shown in Fig.1. The fine particles 13a are derived from the plating nuclei formed on precipitation of the metallic material 13 in electroplating.

In cases where the surface layer 14 continuously coats the surface of the active material layer 12, the surface layer 14 has a number of micropores (not shown) open on its surface and connecting to the active material layer 12. The micropores extend in the thickness direction of the surface layer 14. The micropores enable passage of a nonaqueous electrolyte. The role of the micropores is to supply a nonaqueous electrolyte into the active material layer 12. The amount of the micropores is preferably such that when the negative electrode 10 is observed from above by an electron microscope, the ratio of the area covered with the metallic material 13, namely a coating ratio, is not more than 95%, more preferably 80% or less, even more preferably 60% or less.

According to conventional techniques, coating the surface of the active material layer 12 with a surface layer has been considered effective to prevent falling-off of the active material having pulverized through charge/discharge cycles. Although this idea itself is true, the inventors have found that falling-off of the active material resulting from pulverization with charge/discharge cycles may be prevented without forming a surface layer if the state of existence of the metallic material 13 in the active material layer 12 is properly controlled. Specifically, it has been revealed that falling-off of the active material pulverized with charge/discharge cycles can be prevented without forming a surface layer by coating the surface of the particles 12a in the active material layer 12 with the metallic material 13 and providing adequate voids between the coated particles 12a. In view of this, the surface layer functions sufficiently with a minimized small thickness, and, in some cases, the surface layer may be dispensed with. To provide no surface layer is advantageous to prevent lithium dendrite formation and to increase the battery energy density.

The surface layer 14 is made up of a metallic material having low capability of forming a lithium compound. The metallic material of the surface layer 14 may be the same as or different from the metallic material present in the active material layer 12. Taking into consideration ease of production of the negative electrode 10, the metallic material present in the active material layer 12 and the metallic material forming the surface layer 14 are preferably the same.

Any current collector conventionally used in negative electrodes for nonaqueous secondary batteries can be used as the current collector 11 of the negative electrode 10. The current collector 11 is preferably made out of the above-described metallic material having low capability of forming a lithium compound, examples of which are given supra. Current collectors made of copper, nickel or stainless steel are particularly preferred. Copper alloy foil typified by Corson alloy foil is also usable. While not critical in the present embodiment, the thickness of the current collector 11 is preferably 9 to 35 µm in view of the balance between retention of strength of the negative electrode 10 and improvement of energy density.

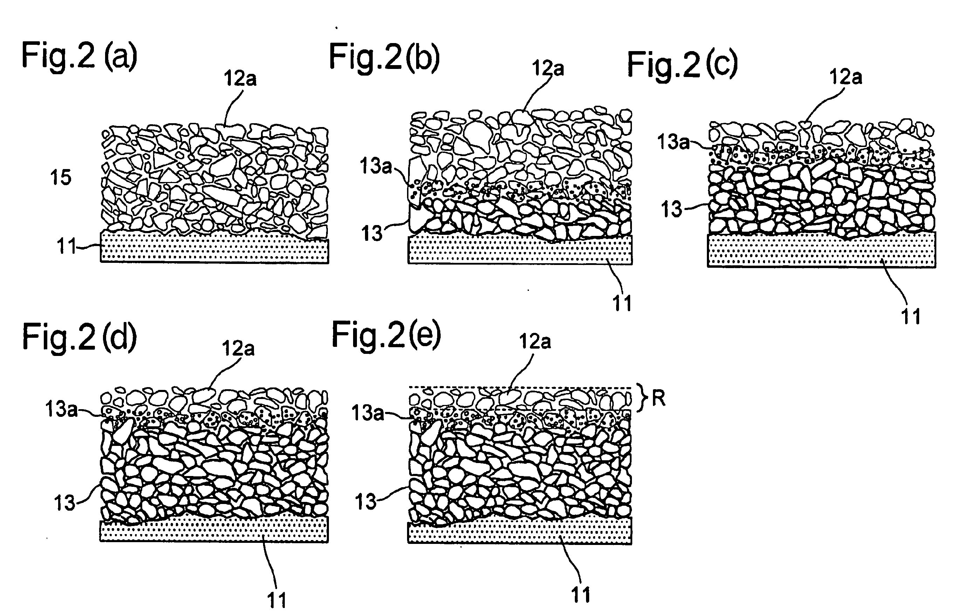

A preferred process of producing the negative electrode 10 of the present embodiment will then be described with reference to Fig. 2. The process includes the steps of forming a coating layer on a current collector 11 using a slurry containing particles of an active material and subjecting the coating layer to electroplating.

As illustrated in Fig. 2(a), a current collector 11 is prepared, and a slurry containing active material particles 12a is applied thereon to form a coating layer 15. The slurry contains a binder, a diluting solvent, etc. in addition to the active material particles. The slurry may further contain a small amount of particles of a conductive material such as acetylene black or graphite. Useful binders include styrene-butadiene rubber (SBR), polyvinylidene fluoride (PVDF), polyethylene (PE), and ethylene-propylene-diene monomer (EPDM). Useful diluting solvents include N-methylpyrrolidone and cyclohexane. The slurry preferably contains about 14% to 40% by weight of the particulate active material and about 0.4% to 4% by weight of the binder. A diluting solvent is added to these particulate materials to prepare the slurry.

The coating layer 15 thus formed has a number of fine interstices between the particles 12a. The current collector 11 with the coating layer 15 is then immersed in a plating bath containing a metallic material having low capability of forming a lithium compound. Whereupon, the plating bath infiltrates into the interstices of the coating layer 15 and reaches the interface between the coating layer 15 and the current collector 11. In this state, electroplating is carried out (this plating will hereinafter be sometimes called penetration plating). Penetration plating is carried out by immersing the current collector 11 as a cathode and a counter electrode (anode) in the plating bath and connecting the two electrodes to a power source.

In the process, it is important to control the deposition of the metallic material during penetration plating. In detail, it is important to have the metallic material deposited in a direction from one side to the opposite side of the coating layer 15. Specifically, electroplating is carried out in a manner such that deposition of the metallic material 13 proceeds from the interface between the coating layer 15 and the current collector 11 toward the surface of the coating layer 15 as illustrated in Figs. 2(b) through 2(d). By causing the metallic material 13 to be deposited in that way, the active material particles 12a are successfully coated with the metallic material 13; voids are successfully formed between the metallic material-coated particles 12a coated with the metallic material 13; and, in addition, the above-recited preferred range of the proportion of the voids is achievable more easily.

The conditions of penetration plating for depositing the metallic material 13 as described include the composition and pH of the plating bath and the electrolytic current density. In using elemental silicon as an active material, for instance, the pH of the plating bath is preferably 7.1 or higher, more preferably 7.1 to 11. With a plating bath at pH 7.1 or higher, the surface of the active material particles 12a is cleaned to have a uniform surface condition, which enables uniform deposition of the metallic material 13 thereon, while leaving moderate voids between the particles 12a. With a plating bath at pH 11 or lower, appreciable dissolution of the particles 12a may be prevented. The pH values recited here are those measured at the penetration plating temperature. In penetration plating with copper as a metallic material, a copper pyrophosphate plating bath is preferably used. In using nickel as a metallic material, an alkaline nickel bath, for example, is preferably used. To use a copper pyrophosphate plating bath is advantageous in that the aforementioned voids can easily be formed throughout the thickness of the active material layer even when the active material layer has an increased thickness. Using a copper pyrophosphate bath provides an additional advantage that the metallic material 13, while being deposited on the surface of the active material particles 12a, is hardly deposited between the particles 12a so as to leave vacant spaces therebetween. The copper pyrophosphate bath to be used preferably has the following composition and pH.
Copper pyrophosphate: 85-120 g/l
Potassium pyrophosphate: 300-600 g/l
Potassium nitrate: 15-65 g/l
Bath temperature: 45-60°C
Current density: 1-7 A/dm²
pH: adjusted to 7.1-11, preferably 7.1 to 9.5, by the addition of aqueous ammonia and polyphosphoric acid.

When in using an alkaline nickel bath, the nickel salt to be used is exemplified by nickel sulfate hexahydrate. An ammonium salt, e.g., ammonium chloride, can be used as an alkali source to make the bath alkaline. The bath may further contain boric acid, etc. in addition. A preferred composition and a preferred pH of the bath are as follows.
Nickel sulfate: 100-250 g/l
Ammonium chloride: 15-30 g/l
Boric acid: 15-45 g/l
Bath temperature: 45-60°C
Current density: 1-7 A/dm²
pH: adjusted to 8-11 by the addition of 100-300 g/l of 25 wt% aqueous ammonia.
Penetration plating using the plating baths described above results in selective deposition of the metallic material on the active material particle surface to coat the particle surface with the metallic material. Plating using the copper pyrophosphate bath is preferred to plating using the alkaline nickel plating bath because the former tends to form adequate vacant spaces in the active material layer 12 thereby providing a negative electrode with a prolonged life as compared with the latter plating.

When the coating layer contains particles of an electroconductive material, the electroconductive material particles serve as precipitation sites so that the metallic material 13 is apt to be deposited on the electroconductive material particles in preference to deposition from the interface between the coating layer 15 and the current collector 11. It may follow that the metallic material 13 cannot be successfully deposited while forming voids as desired between the active material particles 12a. To avoid this, it is desirable that the coating layer contains no or a small amount, if any, of particles of an electroconductive material.

As shown in Figs. 2(b) to 2(d), when electroplating is carried out in a manner such that deposition of the metallic material 13 proceeds from the interface between the coating layer 15 and the current collector 11 to the surface of the coating layer, there always are fine particles 13a composed of plating nuclei of the metallic material 13 in a layer form with an almost constant thickness along the front of the deposition reaction. With the progress of the deposition of the metallic material 13, neighboring fine particles 13a gather into larger particles and, with further progress of the deposition, those larger particles gather one another to continuously coat the surface of the active material particles 12a.

The electroplating is stopped before the metallic material 13 is deposited throughout the whole thickness of the coating layer 15. At this point, the metallic material 13 has not deposited on the surface and the region near the surface of the coating layer 15 as shown in Fig. 2(e). The region of the coating layer 15 where the metallic material 13 is not deposited, e.g., the region R defined by two dotted lines in Fig. 2(e) (the surface of the coating layer 15 and its vicinity) is then removed. Removal of the region R gives the negative electrode 10 illustrated in Fig. 1, in which fine particles 13a of the metallic material 13 adhere to the particles 12a located on and near the surface of the active material layer 12 to form a surface layer 14.

The region R can be removed by, for example, applying water jets or rubbing with a soft material such as sponge. Water jetting is preferred in terms of production efficiency because washing with water after electroplating and removal of the region R can be accomplished simultaneously. When water jetting is applied, it is advisable to use a water-soluble binder in the slurry to be used to form the coating layer 15 so as to facilitate removal of the region R. Such a binder is exemplified by styrene-butadiene rubber (SBR). Since the inside of the active material layer has undergone penetration plating, the active material layer itself is not destroyed even if the water soluble binder is dissolved and removed by the water jetting operation.

The surface condition of the resulting negative electrode 10 varies depending on the degree of removal of the region R. When, for example, a strong water jet is applied, the region R is removed to a considerable degree, and the fine particles 13a of the metallic material 13 that are distributed like islands on the surface of the active material particles 12a are completely removed, on the surface of the negative electrode 10, only leaving a thin surface layer 14 formed of a continuous film of the metallic material 13. When, on the other hand, a weak water jet is used, removal of the region R is not so remarkable, leaving a thin surface layer 14 formed of discontinuous film of the metallic material 13, or a discontinuous surface layer 14 composed of the fine particles 13a of the metallic material 13 distributed like islands on the surface of the active material particles 12a, or no surface layer on the surface of the negative electrode 10.

The thus obtained negative electrode 10 is well suited for use in nonaqueous secondary batteries, e.g., lithium secondary batteries. The positive electrode to be used is obtained as follows. A positive electrode active material and, if necessary, an electroconductive material and a binder are mixed in an appropriate solvent to prepare a positive electrode active material slurry. The active material slurry is applied to a current collector, dried, rolled, and pressed, followed by cutting and punching. Conventional positive electrode active materials can be used, including lithium-nickel composite oxide, lithium-manganese composite oxide, and lithium-cobalt composite oxide. Preferred separators to be used in the battery include nonwoven fabric of synthetic resins and a porous film of polyethylene or polypropylene. The nonaqueous electrolyte is a solution of a lithium salt, a supporting electrolyte, in an organic solvent. Examples of the lithium salt include LiClO₄, LiAlCl₄, LiPF₆, LiAsF₆, LiSbF₆, LiSCN, LiCl, LiBr, LiI, LiCF₃SO₃, and LiC₄F₉SO₃.

### Examples

The present invention will now be illustrated in greater detail with reference to Examples, but it should be understood that the invention is not construed as being limited thereto.

### Example 1

A 18 µm thick electrolytic copper foil as a current collector was cleaned with an acid at room temperature for 30 seconds and washed with pure water for 15 seconds. A slurry containing Si particles was applied to the current collector to a thickness of 15 µm to form a coating layer. The particles had a median particle size D₅₀ of 2 µm. The slurry contained the particles and styrene-butadiene rubber (binder) at a weight ratio of 100:1.7 with no electroconductive particles.

The current collector having the coating layer was immersed in a copper pyrophosphate bath having the following composition, and the coating layer was penetration-plated with copper by electrolysis under the following conditions to form an active material layer. A DSE was used as a positive electrode, and a direct current power source was used.
Copper pyrophosphate trihydrate: 105 g/l
Potassium pyrophosphate: 450 g/l
Potassium nitrate: 30 g/l
Bath temperature: 50°C
Current density: 3 A/dm²
pH: adjusted to 8.2 by the addition of aqueous ammonia and polyphosphoric acid.

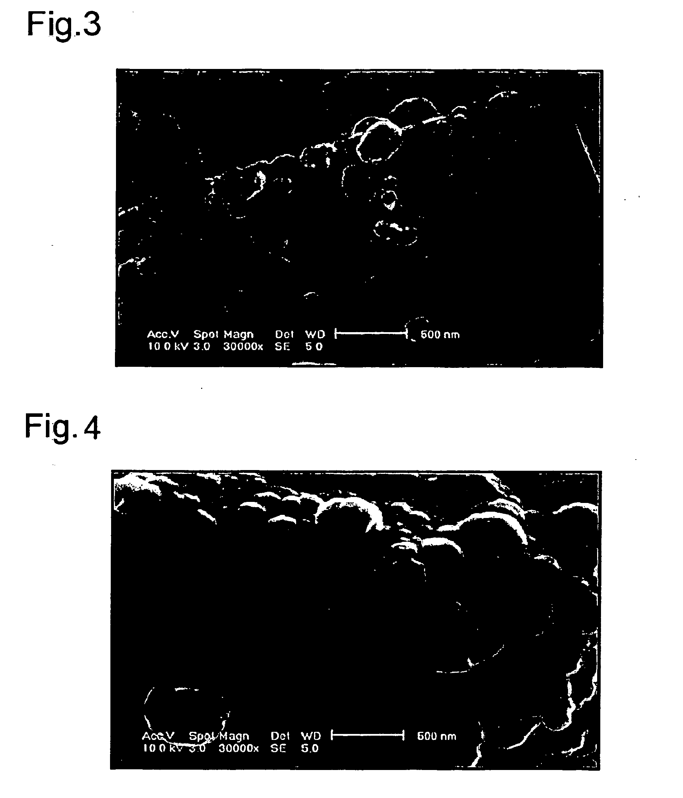

The penetration plating was stopped before copper was deposited throughout the thickness of the coating layer. The current collector having the penetration-plated coating layer was taken out of the plating bath. Water jets were applied to the coating layer under a water pressure of 1 Mpa to remove the region where copper had not been deposited. The current collector with the coating layer was then dried in the atmosphere to provide a negative electrode having the structure shown in Fig. 1. The surface of the resulting negative electrode was observed with an electron microscope. The micrograph is shown in Fig. 3. The micrograph reveals the surface of the active material layer discontinuously coated with a surface layer of copper particles. The surface layer had an average thickness of 0.05 µm. The active material particles inside the active material layer were found coated with an average thickness of 0.18 µm of copper film. Mapping of copper presence by an electron microscope revealed that the proportion of the voids in the active material layer was 35% by volume.

### Example 2

A negative electrode was made in the same manner as in Example 1, except for changing the water jet pressure to 2 MPa. The surface of the resulting negative electrode was observed with an electron microscope to obtain the micrograph of Fig. 4. As is apparent from Fig. 4, the surface of the active material layer is continuously coated with a surface layer formed of numerous copper particles bound to one another. A cross section of the negative electrode was observed by an electron microscope to find that the surface layer had an average thickness of 0.1 µm and that the surface layer had micropores extending in the thickness direction thereof. The active material particles inside the active material layer were found coated with an average thickness of 0.18 µm of copper film. Mapping of copper presence by an electron microscope revealed that the proportion of the voids in the active material layer was 30% by volume.

### Example 3

A negative electrode was made in the same manner as in Example 1, except that the water jets were not applied and that the copper penetration plating time was adjusted so that the existence ratio of copper (metallic material 13) in the active material layer is 90%. The results of electron microscopic observation on the surface of the active material layer revealed absence of a copper surface layer. The active material particles inside the active material layer were found coated with an average thickness of 0.18 µm of copper layer as measured within the region of the active material layer where copper had penetrated. As a result of electron microscopic mapping of copper presence in the region of the active material where copper had penetrated, the proportion of the voids in the region was found to be 28% by volume.

### Example 4

A negative electrode was made in the same manner as in Example 1, except that the water jets were not applied and that the copper penetration plating time was adjusted so as to form a surface layer with an average thickness of 0.23 µm. The results of electron microscopic observation on the surface of the resulting negative electrode revealed that the surface layer had micropores extending in its thickness direction. The active material particles inside the active material layer were found coated with an average thickness of 0.18 µm of copper layer. As a result of electron microscopic mapping of copper presence, the proportion of the voids in the active material layer was found to be 28% by volume.

### Comparative Example 1

A negative electrode was obtained in the same manner as in Example 1 with the following exceptions. The copper pyrophosphate plating bath used in Example 1 was replaced with a copper sulfate bath containing 250 g/l of CuSO₄ and 70 g/l of H₂SO₄. The penetration plating was conducted at a current density of 5 A/dm². The penetration plating was carried out to deposit copper throughout the whole thickness of the coating layer and further continued until a 3 µm thick surface layer of copper was formed on the coating layer. As a result of electron microscopic mapping of copper presence, the proportion of the voids in the active material layer was found to be 10% by volume.

### Evaluation 1

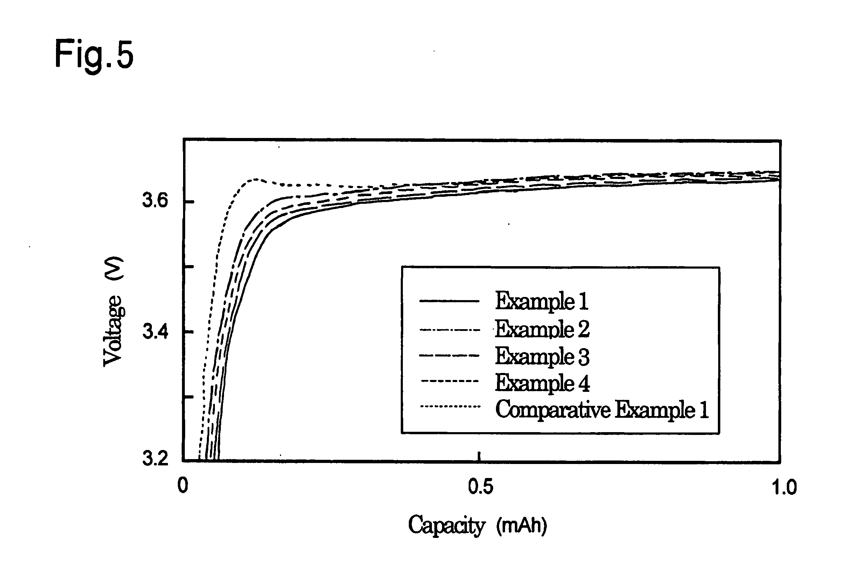

Each of the negative electrodes obtained in Examples 1 to 4 and Comparative Example 1 was assembled into a lithium secondary battery together with LiCo_{1/3}Ni_{1/3}Mn_{1/3}O₂ as a positive electrode and an electrolyte prepared by dissolving LiPF₆ in a 1:1 by volume mixed solvent of ethylene carbonate and diethyl carbonate in a concentration of 1 mol/l and externally adding 2% by volume of vinylene carbonate to the solution. The resulting secondary battery was subjected to a first charge operation. The charging curve obtained in the first charge is shown in Fig. 5. As is apparent from the results in Fig. 5, the charging voltage is lower, i.e., the overpotential is lower in the cases of using the negative electrodes of Examples 1 to 4 than in the case of using the negative electrode of Comparative Example 1. Of Examples 1 to 4, Example 1 shows the lowest overpotential, and the overpotential increases in this order: Example 3, Example 4, and Example 2. The reason the negative electrode of Example 3 having no surface layer shows a higher overpotential than the negative electrode of Example 1 having a surface layer is considered to be as follows. Since the former electrode has no surface layer, the Si particles making up the active material layer are exposed on the surface of the negative electrode. Silicon is a poorly electron conductive material. This seems to be the cause of the higher overpotential of the negative electrode of Example 3. In contrast, the Si particles of the negative electrode of Example 1 are coated thinly with copper and are thereby endowed with electron conductivity. Moreover, the negative electrode of Example 1 does not interfere with smooth passage of the electrolyte. These reasons are considered to account for the lower overpotential in Example 1 than in Example 3.

### Evaluation 2

Twenty lithium secondary batteries were made in the same manner as in Evaluation 1 per each of the negative electrodes of Examples 1 to 4 and Comparative Example 1. The batteries were charged and discharged up to 50 cycles under the following conditions, and the rate of occurrence of a short-circuit was measured. The results are shown in Table 1. The charge/discharge rate was 1C. The charging was conducted at a constant current to 4.2 V. On reaching 4.2 V, the voltage was maintained constant. When the current reached 1/5, the charging was stopped. The discharging was carried out at a constant voltage to 2.7 V, at which the discharge was stopped.

**Table 1**

| | Rate of Occurrence of Short-Circuit (%) |
|---|---|
| Example 1 | 5 |
| Example 2 | 15 |
| Example 3 | 0 |
| Example 4 | 15 |
| Comparative Example 1 | 55 |

The results in Table 1 apparently prove that the secondary batteries using the negative electrodes of Examples have a markedly lower rate of occurrence of short-circuits than the batteries using the negative electrode of Comparative Example 1. This is considered to be because lithium reduction on the surface of the negative electrode and the resulting dendrite growth are prevented in the secondary batteries of Examples during charge.

### Industrial Applicability

According to the invention, even if the particles of an active material pulverize through repeated expansion and contraction accompanying charge/discharge cycles, the particles are prevented from falling off. A nonaqueous electrolyte is allowed to reach the active material layer easily, so that the overpotential in the initial charge is reduced, whereby lithium dendrite growth on the negative electrode surface is prevented. The nonaqueous electrolyte hardly decomposes, and an increase of irreversible capacity is prevented. The positive electrode is protected from damage.

## Claims

1. A nonaqueous secondary battery negative electrode comprising an active material layer containing particles of an active material,
the active material layer having a first metallic material which has low capability of forming a lithium compound and is deposited between the particles by electroplating, and
the active material layer having its surface coated continuously with a surface layer, the surface layer having an average thickness of 0.25 µm or smaller and 0.01 µm or more and comprising a second metallic material which is the same as or different from the first metallic material, and wherein the surface layer has a large number of micropores extending in the thickness direction thereof.

2. The nonaqueous secondary battery negative electrode according to claim 1, wherein the surface of the active material layer is coated discontinuously with the surface layer comprising particles of the metallic material.

3. The nonaqueous secondary battery negative electrode according to claim 1, wherein the surface of the particles inside the active material layer are coated with the metallic material with voids formed between the metallic material-coated particles, the proportion of the voids in the active material layer being 15% to 40% by volume.

4. The nonaqueous secondary battery negative electrode according to claim 3, wherein the metallic material coating the particles has an average thickness of 0.05 to 2 µm.

5. The nonaqueous secondary battery negative electrode according to claim 1, wherein the active material layer is free from a particulate electroconductive material or contains 3% by weight or less of a particulate electroconductive material based on the active material layer.

6. A nonaqueous secondary battery negative electrode according to claim 3 , wherein
the active material layer having a metallic material which has low capability of forming a lithium compound is deposited between the particles by electroplating using a plating bath having a pH of 7.1 or higher.

7. A process for producing the nonaqueous electrolyte secondary battery negative electrode according to claim 1, which comprises the steps of:
forming a coating layer using a slurry containing a particulate active material,
subjecting the coating layer to electroplating in a plating bath containing a metallic material having low capability of forming a lithium compound to deposit the metallic material in a direction from one side to the other side of the coating layer,
stopping the electroplating before the metallic material is deposited across the whole thickness of the coating layer, and
removing the part of the coating layer where the metallic material is not deposited.

8. The process for producing the nonaqueous electrolyte secondary battery negative electrode according to claim 7, wherein the slurry contains a water-soluble binder, and the step of removing of the part is carried out by applying a water jet.

## Patentansprüche

1. Negative Elektrode für eine Sekundärbatterie mit wasserfreiem Elektrolyt, umfassend eine Schicht aus aktivem Material, die Teilchen aus einem aktiven Material enthält,
wobei die Schicht aus aktivem Material ein erstes metallisches Material aufweist, das eine geringe Fähigkeit zum Bilden einer Lithiumverbindung hat und durch Elektroplattieren zwischen den Teilchen abgeschieden ist, und
wobei die Schicht aus aktivem Material ihre Oberfläche kontinuierlich mit einer Oberflächenschicht beschichtet hat, wobei die Oberflächenschicht eine durchschnittliche Dicke von 0,25 µm oder weniger und 0,01 µm oder mehr aufweist und ein zweites metallisches Material umfasst, das das gleiche wie das erste metallische Material oder ein davon verschiedenes ist, und die Oberflächenschicht weist eine große Anzahl an Mikroporen auf, die sich in die Richtung der Dicke davon erstrecken.

2. Negative Elektrode für eine Sekundärbatterie mit wasserfreiem Elektrolyt nach Anspruch 1, wobei die Oberfläche der Schicht aus aktivem Material diskontinuierlich mit der Oberflächenschicht beschichtet ist, die Teilchen aus dem metallischen Material umfasst.

3. Negative Elektrode für eine Sekundärbatterie mit wasserfreiem Elektrolyt nach Anspruch 1, wobei die Oberfläche der Teilchen im Inneren der Schicht aus aktivem Material mit dem metallischen Material mit Hohlräumen, die zwischen den mit dem metallischen Material beschichteten Teilchen gebildet werden, beschichtet ist, wobei der Anteil der Hohlräume in der Schicht aus aktivem Material 15 Volumen-% bis 40 Volumen-% beträgt.

4. Negative Elektrode für eine Sekundärbatterie mit wasserfreiem Elektrolyt nach Anspruch 3, wobei das metallische Material, das die Teilchen beschichtet, eine durchschnittliche Dicke von 0,05 bis 2 µm hat.

5. Negative Elektrode für eine Sekundärbatterie mit wasserfreiem Elektrolyt nach Anspruch 1, wobei die Schicht aus aktivem Material frei von einem partikulären elektrisch leitenden Material ist oder 3 Gewichts-% oder weniger eines partikulären elektrisch leitenden Materials, basierend auf der Schicht aus aktivem Material, enthält.

6. Negative Elektrode für eine Sekundärbatterie mit wasserfreiem Elektrolyt nach Anspruch 3, wobei
die Schicht aus aktivem Material, die ein metallisches Material aufweist, das eine geringe Fähigkeit zum Bilden einer Lithiumverbindung hat, zwischen den Teilchen durch Elektroplattieren unter Verwendung eines Plattierbads, das einen pH von 7,1 oder höher aufweist, abgeschieden ist.

7. Verfahren zum Herstellen der negativen Elektrode für eine Sekundärbatterie mit wasserfreiem Elektrolyt nach Anspruch 1, das die folgenden Schritte umfasst:
Bilden einer Beschichtungsschicht unter Verwendung einer Aufschlämmung, die ein partikuläres aktives Material enthält,
Unterziehen der Beschichtungsschicht eines Elektroplattierens in einem Plattierbad, das ein metallisches Material enthält, das eine geringe Fähigkeit zum Bilden einer Lithiumverbindung hat, um das metallische Material in einer Richtung von einer Seite zu der anderen Seite der Beschichtungsschicht abzuscheiden,
Stoppen des Elektroplattierens, bevor das metallische Material über die gesamte Dicke der Beschichtungsschicht abgeschieden ist, und
Entfernen des Teils der Beschichtungsschicht, wo das metallische Material nicht abgeschieden ist.

8. Verfahren zum Herstellen der negativen Elektrode für eine Sekundärbatterie mit wasserfreiem Elektrolyt nach Anspruch 7, wobei die Aufschlämmung ein wasserlösliches Bindemittel enthält, und der Schritt des Entfernens des Teils ausgeführt wird, indem ein Wasserstrahl angewendet wird.

## Revendications

1. Electrode négative de batterie secondaire non aqueuse comprenant une couche de matériau actif contenant des particules d'un matériau actif,
la couche de matériau actif ayant un premier matériau métallique qui présente une faible capacité de formation d'un composé de lithium et est déposée entre les particules par électrogalvanisation, et
la couche de matériau actif ayant sa surface revêtue de manière continue avec une couche de surface, la couche de surface ayant une épaisseur moyenne de 0,25 µm ou moins et de 0,01 µm ou plus et comprenant un deuxième matériau métallique qui est identique au premier matériau métallique ou différent de celui-ci, et où la couche de surface présente un grand nombre de micropores s'étendant dans sa direction de l'épaisseur.

2. Electrode négative de batterie secondaire non aqueuse selon la revendication 1, dans laquelle la surface de la couche de matériau actif est revêtue de manière discontinue avec la couche de surface comprenant des particules du matériau métallique.

3. Electrode négative de batterie secondaire non aqueuse selon la revendication 1, dans laquelle la surface des particules à l'intérieur de la couche de matériau actif est revêtue avec le matériau métallique avec des vides formés entre les particules revêtues de matériau métallique, la proportion des vides dans la couche de matériau actif étant de 15% à 40% en volume.

4. Electrode négative de batterie secondaire non aqueuse selon la revendication 3, dans laquelle le matériau métallique revêtant les particules présente une épaisseur moyenne allant de 0,05 à 2 µm.

5. Electrode négative de batterie secondaire non aqueuse selon la revendication 1, dans laquelle la couche de matériau actif est exempte d'un matériau éléctroconducteur particulaire ou contient 3% en poids ou moins d'un matériau éléctroconducteur particulaire sur la base de la couche de matériau actif.

6. Electrode négative de batterie secondaire non aqueuse selon la revendication 3, dans laquelle
la couche de matériau actif ayant un matériau métallique qui présente une faible capacité de formation d'un composé de lithium est déposée entre les particules par électrogalvanisation en utilisant un bain de galvanisation ayant un pH de 7,1 ou plus.

7. Processus de production de l'électrode négative de batterie secondaire à électrolyte non aqueux selon la revendication 1, qui comprend les étapes qui consistent :
à former une couche de revêtement en utilisant une suspension contenant un matériau actif particulaire,
à soumettre la couche de revêtement à une électrogalvanisation dans un bain de galvanisation contenant un matériau métallique ayant une faible capacité de formation d'un composé de lithium pour déposer le matériau métallique dans une direction allant d'un côté à l'autre de la couche de revêtement,
à arrêter l'électrogalvanisation avant le dépôt du matériau métallique sur toute l'épaisseur de la couche de revêtement, et
à retirer la partie de la couche de revêtement où le matériau métallique n'est pas déposé.

8. Processus de production de l'électrode négative de batterie secondaire à électrolyte non aqueux selon la revendication 7, dans lequel la suspension contient un liant hydrosoluble, et l'étape de retrait de la partie est effectuée par application d'un jet d'eau.
